# EUROPEAN PATENT SPECIFICATION

(11) **EP 4 512 714 B1**
(45) Date of publication and mention of the grant of the patent: **25.02.2026**
(21) Application number: 24189433.6
(22) Date of filing: 18.07.2024
(51) Int. Cl.: B64D 9/00, B60P 7/08, B61D 45/00, B63B 25/28

(54) **LASHING DEVICE FOR A CARGO LOADING SYSTEM OF A MEANS OF TRANSPORT AND AIRCRAFT**
ZURRVORRICHTUNG FÜR EIN FRACHTLADESYSTEM EINES VERKEHRSMITTELS UND FLUGZEUG
DISPOSITIF D'ARRIMAGE POUR UN SYSTÈME DE CHARGEMENT DE FRET D'UN MOYEN DE TRANSPORT ET D'UN AÉRONEF

(30) Priority: 24.08.2023 DE 102023122750
(43) Date of publication of application: 26.02.2025
(73) Proprietor: Airbus Defence and Space GmbH, 82024 Taufkirchen (DE)
(72) Inventor: WÄHNING, Jochen, 82024 Taufkirchen (DE); FISLAGE, Tobias, 82024 Taufkirchen (DE); SAWATZKI, Hendrik, 82024 Taufkirchen (DE)
(74) Representative: Isarpatent

(56) References cited:
- WO-A1-2011/034556
- DE-U1- 202017 102 378
- US-A- 2 756 693
- US-A1- 2006 133 907
- US-A1- 2010 284 758

## Description

The present invention relates to a lashing device for a cargo loading system of a means of transport, in particular an aircraft, and to an aircraft having a lashing device of this type.

Means of transport, such as aircraft, are used both for transporting cargo and for transporting passengers. For example, one and the same machine can be used for transporting passengers and for transporting cargo. In addition to the transfer and the locking or lashing of cargo items, the cargo loading system in such a case has to permit the installation of seats for transporting passengers. The cargo loading systems therefore have to be convertible flexibly and quickly.

The cargo items to be transported may be highly diverse and vary greatly in weight. For example, standardized containers and pallets and non-standardized goods, such as bags or vehicles lashed onto chipboard, are transported. The comparatively high loads of the cargo items make very high demands on the statics and structure of the floor construction and on the required load lashing points. In particular, it is important for the cargo items to be able to be handled in an extremely short loading time by a minimum of operating personnel.

Known systems use the usual functional units provided on the cargo deck, such as lashing points, roller units, latch elements and guide rails, for transporting cargo, such that pallets or containers with cargo can be secured.

Alternatively, seats and other systems may be mounted directly on the cargo deck. For this purpose, however, additional fastening options are required. Conventionally, fastening rails or lashing points serving as installation interfaces are provided in such a way that either passenger seats or the aforementioned functional elements of the cargo loading system can be secured on the cargo hold floor. Lashing points are provided for lashing loads by means of a lashing ring. As a rule, a lashing ring can fix merely one chain or one strap for lashing the cargo. The lashing points are distributed numerously and mostly at equal distances in the cargo hold. The lashing point is usually attached directly to the aircraft structure, in particular to a frame of the aircraft structure, in order to be able to absorb large forces and torques in all directions.

For example, document US 2010/284758 A1 describes a lashing strap that is installed on a supporting surface, with the upper side of the lashing strap being essentially coplanar with the supporting surface. A fastening block is located in the cup-shaped housing, wherein the fastening block is rotatably mounted on the underside of the cup-shaped housing. Furthermore, document US 2006/133907 A1 describes a lashing device of the type used to secure lashing ropes or straps, e.g., in a motor vehicle such as a truck. In document US 2 756 693 A, a tie-down fitting is described, which is applied to a headed stud mounted in floor and wall recesses of a size to receive the fittings to be described so that they may freely swivel about the stud while in use but will lie flush in the recess when left in position. DE202017102378U1 describes a fitting plate for fastening a container on board a ship. WO2011/034556A1 describes a retractable fitting assembly.

It is the object of the present invention to provide a lashing device which permits a high degree of flexibility in the arrangement of cargo on the cargo deck.

According to the invention, this object is achieved in each case by the subject matter of the independent claim.

According to a first aspect of the invention, a lashing device for a cargo loading system of a means of transport, in particular an aircraft, is provided. The lashing device comprises a main body for load bearing and securing to a supporting structure. Furthermore, the lashing device comprises at least two lashing elements for lashing loads or goods. The at least two lashing elements are mounted on the main body so as to be pivotable about a pivot axis and are designed to be lashable in each case individually or as a unit.

According to a second aspect of the invention, an aircraft is provided. The aircraft comprises a cargo loading system having at least one lashing device according to the invention.

A concept on which the present invention is based consists in extending an existing lashing device or an existing lashing point, which is equipped with a lashing ring or a lashing element for lashing a single load, in such a way that a plurality of chains or straps can be secured to said lashing point if the loads secured to said lashing point do not in total exceed a predetermined loading limit. If the lashing element can/may be connected merely to a single chain or a single strap for geometric reasons or due to regulations, the number of lashing elements may be increased to at least two lashing elements, and therefore a plurality of chains or straps corresponding to the number of lashing elements are securable to the lashing device. In other words, the lashing ring can be split into at least two parts. Thus, at least two significantly lower loads in relation to the load limit can be secured, if required, by means of said one lashing device. In the case of three or more lashing elements, two or more adjacent lashing elements may optionally be lashed as a unit, with at least one remaining lashing element being lashed individually. This means that a subset of the number of lashing elements may also be lashed as a unit, while the remaining subset of the number of lashing elements is in each case lashed individually. Advantageously, therefore, flexibility in the loading and the transport of a plurality of light cargo items can be increased.

One advantage of the lashing device according to the invention is that, in particular, the main body in known solutions can be identically designed in order to avoid new loading tests and/or other interfaces. Furthermore, force is introduced by the lashing device according to the invention in the same manner as in the case of the existing lashing point with only one lashing ring, which promotes a very simple, cost-effective and easily implemented solution. Furthermore, the at least two lashing elements, if they are lashed as a unit, can, with appropriate dimensioning, provide at least the loading limit of the known individual lashing ring. In particular in the case of aircraft, predetermined loading limits have to be able to be absorbed by the lashing device in order to be approved.

In addition, transportability can be increased by more flexibility in the arrangement of loads in the cargo hold being possible. Smaller or lower loads may stand closer together because more lashing elements are available than in known applications. Since the at least two lashing elements are pivotable independently of one another, there is only a very small restriction in the angle at which the chains or straps can be connected to the at least two lashing elements.

Advantageous embodiments and developments will become apparent from the dependent claims referred back to the independent claims and from the description with reference to the figures.

According to the invention, the at least two lashing elements each have two end sections which form the mounting, which is pivotable about the pivot axis, on the main body. This means that the at least two lashing elements are mounted on the main body so as to be pivotable about the pivot axis by the in each case two end sections of the at least two lashing elements being mounted on the main body so as to be pivotable about the pivot axis.

For example, the at least two lashing elements have a D shape rotated by 90°. Therefore, the at least two lashing elements may also be referred to as D rings. For example, in the case of two lashing elements, the designation double D ring may be used. By way of example, the D shape provides an extension of an arc into the two end sections which are designed for connecting to the main body.

According to the invention, the two end sections of a first lashing element of the at least two lashing elements are formed in a complementary manner to corresponding end sections of a second lashing element of the at least two lashing elements in such a way that the corresponding end sections of the at least two lashing elements are arranged next to each other along the pivot axis. Thus, force is introduced by the at least two lashing elements into the main body substantially at the same location.

According to the invention, an end section of the first lashing element has a bifurcation region which axially delimits the corresponding end section of the second lashing element with respect to the pivot axis. That is to say, the corresponding end section of the second lashing element is positioned between the two bifurcation legs of the end section of the first lashing element in relation to the pivot axis. In addition, the other end section of the first or the second lashing element may have a bifurcation region and delimit the end section, corresponding thereto, of the second or the first lashing element.

According to a further development of the lashing device, an end section of the first lashing element and the corresponding end section of the second lashing element each have a bifurcation region, wherein the two bifurcation regions are in engagement with each other.

Alternatively or additionally, one end section of the two lashing elements may have a trifurcation region, which is in engagement with the bifurcation region of the corresponding end section of the other lashing element.

According to a further development of the lashing device, the in each case two end sections each have a through hole in the direction of the pivot axis and are mounted on the main body so as to be pivotable about the pivot axis by means of two bolt devices, wherein the two bolt devices correspond to the through holes in the in each case two end sections.

Optionally, the two bolt devices may be kept spaced apart from each other in the direction of the pivot axis by means of a spring device.

According to a further embodiment of the lashing device, the at least two lashing elements substantially have a square or semi-circular cross section, wherein mutually facing sides of the at least two lashing elements form mutually corresponding surfaces for the flat contact of the mutually facing sides. In this way, the at least two lashing elements as a unit can form the outline of a known individual lashing element. In the context of this application, substantially square or semi-circular means that, in particular, edges or corners may be rounded or chamfered.

According to a further embodiment of the lashing device, a maximum load capacity is distributable between the at least two lashing elements. For example, the maximum load capacity is distributed equally between the at least two lashing elements. That is to say, in the case of two lashing elements, each lashing element can be loaded with half the maximum load capacity if the lashing elements are lashed individually. As a result, in the case of three lashing elements being provided, each lashing element can be loaded, for example, with a third of the maximum load capacity if the lashing elements are lashed individually. Alternatively, other distributions of the load portions, for example in a ratio of 2:1 or 3:2, between the respective lashing elements are conceivable. In order to provide the maximum load capacity for a single load, the at least two lashing elements may be lashed as a unit, i.e. connected with a common chain or a common strap, for example a tensioning strap.

According to a further embodiment of the lashing device, the at least two lashing elements are pivotable about the pivot axis into an at least approximately horizontal position in order to provide the lashing device in a space-saving and/or obstruction-free manner in a non-lashed state. For example, the main body may have a depression for the at least two lashing elements. Thus, the at least two lashing elements in the non-lashed state can be pivoted, for example, into the depression in the main body such that the lashing elements do not protrude from the cargo hold floor.

According to a further embodiment, the lashing device further comprises a clamping device, which is designed to hold the at least two lashing elements together in a non-lashed state as a unit, so that the at least two lashing elements are easy to handle, in particular pivotable together. In this way, a user can bring the at least two lashing elements into position, and/or hold them, as a unit, for example, with one hand while he or she secures a chain or a strap, for example a tensioning strap, to the at least two lashing elements.

In particular, all of the features of the device are transferable to the associated method, and vice versa. Further possible embodiments, developments and implementations of the invention also encompass combinations, which are not explicitly mentioned, of features of the invention described above or below with regard to the exemplary embodiments without departing from the invention, which is defined by the claims. A person skilled in the art here will in particular also add individual aspects as improvements or additions to the respective basic form of the present invention.

The present invention will be explained in more detail below using exemplary embodiments with reference to the accompanying figures of the drawings. In the figures:
- Fig. 1: shows an exploded illustration in a front view of a lashing device according to an exemplary embodiment of the invention;
- Fig. 2: shows a schematic sectional illustration of the lashing device from Fig. 1 in an operationally ready state;
- Fig. 3: shows a perspective view of a lashing device according to a further exemplary embodiment of the invention with two lashing elements, which are depicted in a position as a unit;
- Fig. 4: shows a perspective view of a lashing device according to a further exemplary embodiment of the invention with two lashing elements, which are depicted in a position for the individual lashing;
- Fig. 5: shows a schematic side view of a lashing device according to a further exemplary embodiment of the invention in a lashed state in which two lashing elements are individually lashed;
- Fig. 6: shows a schematic view of an aircraft according to an exemplary embodiment of the invention with a cargo loading system and a lashing device.

In the figures of the drawing, elements, features and components which are identical, functionally identical and of identical action are denoted in each case by the same reference designations unless stated otherwise.

Although specific embodiments and developments are illustrated and described here, a person skilled in the art will prefer that a large number of alternative embodiments can replace the specific exemplary embodiments which are illustrated and described, without departing from the scope of the present invention.

The accompanying figures are intended to impart a further understanding of embodiments of the invention and, in association with the description, serve to explain principles and concepts of the invention. Other exemplary embodiments and many of the stated advantages will become apparent with reference to the drawings. The drawings are to be understood only as being schematic drawings, and the elements of the drawings are not necessarily shown true to scale relative to one another. Direction-indicating terminology such as, for instance, "top", "bottom", "left", "right", "above", "below", "horizontal", "vertical", "front", "rear" and similar indications are used only for explanatory purposes and do not serve to restrict the generality to specific configurations as shown in the figures.

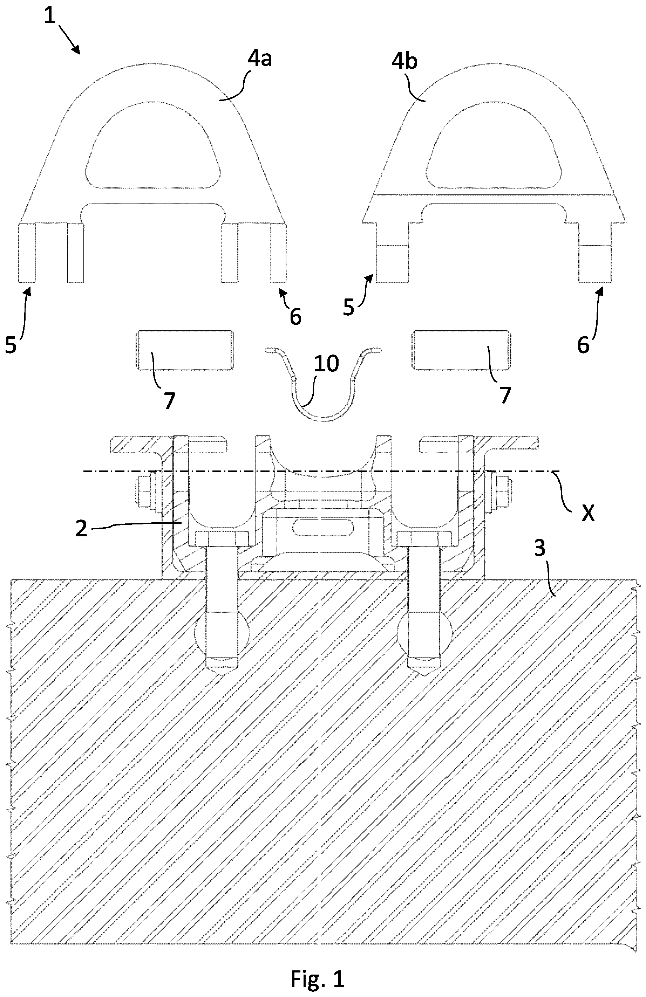

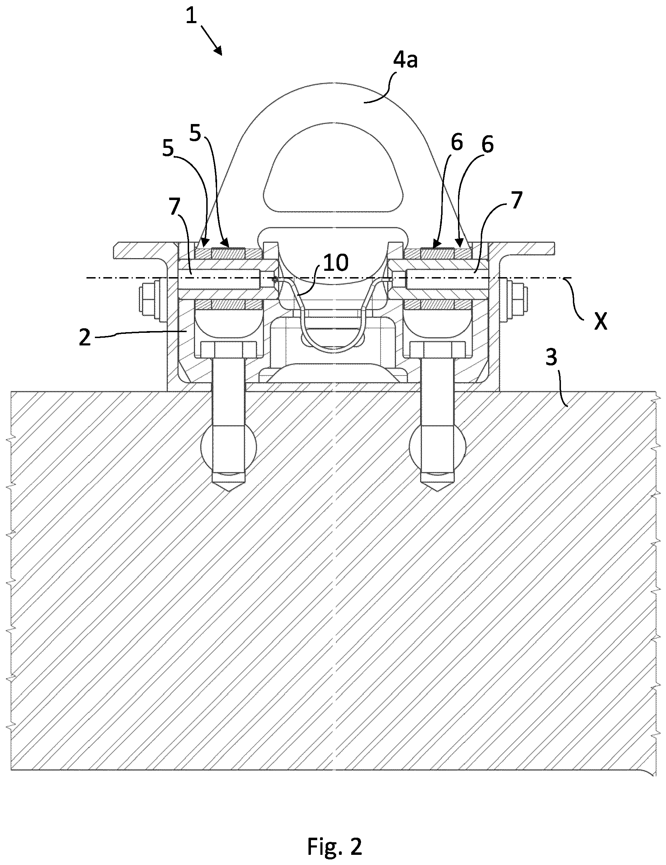

Figs 1 and 2 show a front view of a lashing device 1 according to an exemplary embodiment of the invention, wherein Fig. 1 illustrates an exploded view of the lashing device 1 and Fig. 2 illustrates a schematic front view of the lashing device 1 in an operationally ready state.

The lashing device 1 is specially designed for a cargo loading system of a means of transport. The lashing device 1 comprises a main body 2 for load bearing and securing to a supporting structure 3 and at least two lashing elements 4a, 4b for lashing loads or goods.

By way of example, two lashing elements 4a and 4b are shown in Fig. 1. The two lashing elements 4a, 4b can be designed, for example, as a lashing ring or as what is referred to as a D ring. The two lashing elements 4a, 4b each have two end sections 5, 6. The two lashing elements 4a, 4b are mounted on the main body 2 so as to be pivotable about a pivot axis X by the in each case two end sections 5, 6 of the two lashing elements being mounted on the main body 2 so as to be pivotable about the pivot axis X.

The two end sections 5, 6 of a first lashing element 4a are formed in a complementary manner to corresponding end sections 5, 6 of a second lashing element 4b in such a way that the corresponding end sections 5 and 6 of the two lashing elements 4a and 4b, respectively, are arranged next to each other along the pivot axis X. In this case, an end section 5 or 6 of the first lashing element 4a has, for example, a bifurcation region which axially delimits the corresponding end section 5 or 6 of the second lashing element 4b with respect to the pivot axis X. In the exemplary embodiment according to Figs 1 and 2, both end sections 5, 6 of the first lashing element 4a have a bifurcation region. For example, a distance between the two bifurcation legs in the bifurcation region 5 is dimensioned such that the corresponding end section 5 is positionable between the two bifurcation legs. The two bifurcation regions can be formed identically, in particular can be the same size, or can be designed differently, in order to precisely determine an installation option.

In addition, the lashing device 1 here comprises two bolt devices 7 and a spring device 10.

In the operationally ready state, as illustrated in Fig. 2 in a sectional illustration, which intersects the pivot axis X centrally, the two lashing elements 4a, 4b, for example, are formed substantially identically, in particular apart from the end regions 5, 6. This means that the second lashing element 4b lies in front of the sectional plane and only the cut end sections 5 and 6 are illustrated in Fig. 2. The first lashing element 4a is depicted in its entirety.

The two lashing elements 4a, 4b are mounted on the main body 2 so as to be pivotable about the pivot axis X and are designed to be lashable in each case individually or as a unit. In this case, the two end sections 5, 6 of the two lashing elements 4a, 4b each have a through hole in the direction of the pivot axis X. Furthermore, the two lashing elements 4a, 4b are mounted on the main body 2 so as to be pivotable about the pivot axis X by means of two bolt devices 7, wherein the two bolt devices 7 correspond to the through holes in the in each case two end sections 5, 6.

Optionally, the two bolt devices 7 may be kept spaced apart from each other in the direction of the pivot axis X by means of the spring device 10. In this case, the two bolt devices 7 are secured against slipping axially relative to each other, for example, by an outer wall of the main body 2 securing the two bolt devices 7 axially from the outside. In the operationally ready state, the spring device 10 can bring about an axial spring force on the two bolt devices 7 such that the bolt devices 7 are axially precisely fixed.

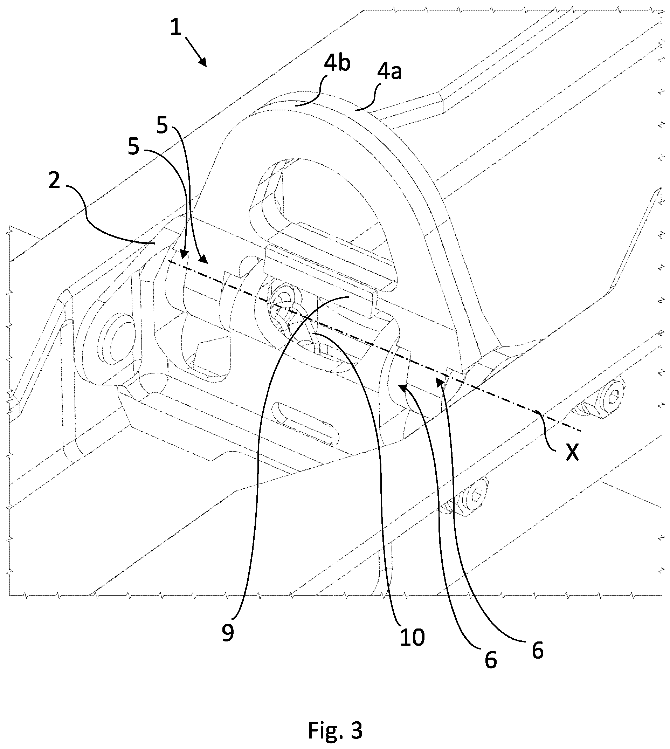

Fig. 3 shows a perspective view of a lashing device 1 according to a further exemplary embodiment of the invention with two lashing elements 4a, 4b, which are depicted in a position as a unit. The lashing device 1 according to Fig. 3 substantially comprises the same features as the lashing device from Fig. 1, unless described otherwise below.

The two lashing elements 4a, 4b may be produced from the same material or a different material. For example, at least one of the two lashing elements 4a, 4b may contain stainless steel or a stainless steel alloy. The stainless steel alloy may preferably contain iron, chromium, nickel and copper. Optionally, the stainless steel alloy may also contain manganese, molybdenum or silicon. The two bolt devices 7 may be produced from the same material as the two lashing elements 4a, 4b. Alternatively, the two bolt devices 7 may contain stainless steel or a stainless steel alloy with iron, chromium, nickel and copper. Optionally, the two bolt devices 7 may additionally contain manganese, molybdenum or silicon.

Furthermore, the two lashing elements 4a, 4b may be pivotable about the pivot axis X into an at least approximately horizontal position in order to provide the lashing device 1 in a space-saving and/or obstruction-free manner in a non-lashed state. Fig. 3 illustrates a depression in the main body 2, in which the two lashing elements 4a, 4b can be deposited.

Furthermore, the lashing device 1 here comprises, for example, a clamping device 9, which is designed to hold the two lashing elements 4a, 4b together in a non-lashed state as a unit, so that the at least two lashing elements are easily pivotable together. The clamping device 9 is mounted, for example, on a transverse web of the two lashing elements 4a, 4b. However, the installation of the clamping device 9 is not limited to this position but rather it may be mounted at any position of the two lashing elements 4a, 4b. In this case, the clamping device 9 holds the two lashing elements 4a, 4b together in a force-fitting and/or form-fitting manner.

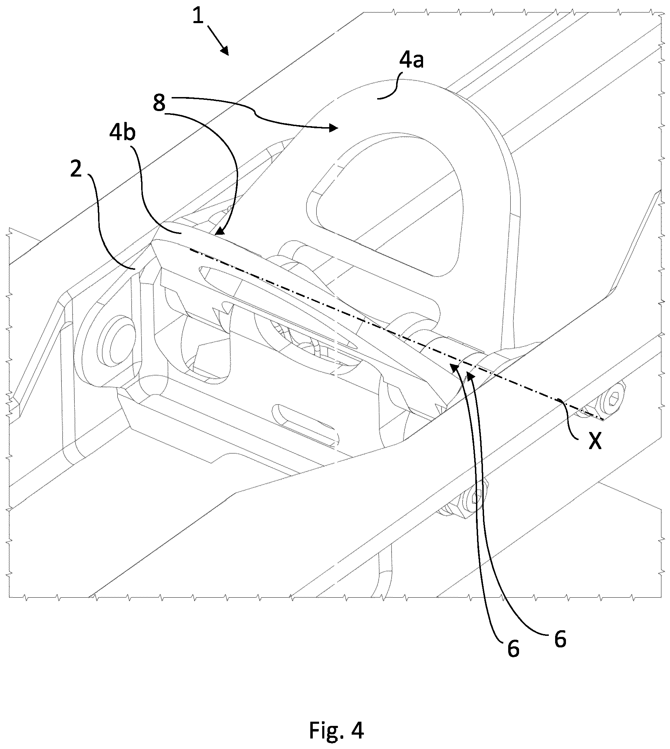

Fig. 4 shows a perspective view of a lashing device 1 according to a further exemplary embodiment of the invention with two lashing elements 4a, 4b, which are depicted in a position for the individual lashing. The lashing device 1 according to Fig. 4 corresponds in particular to the lashing device from Fig. 3, wherein an open position of the two lashing elements 4a, 4b is illustrated here. The clamping device 9 can be omitted in this case. This allows the two lashing elements 4a, 4b to each be lashed individually. The two lashing elements 4a, 4b are pivotable independently of each other.

By way of example, the two lashing elements 4a, 4b substantially have a square cross section, wherein mutually facing sides 8 of the two lashing elements 4a, 4b form mutually corresponding surfaces for the flat contact of the mutually facing sides 8. The edges or corners of the two lashing elements 4a, 4b may be, for example, rounded in order to avoid sharp edges that could cause injury or damage.

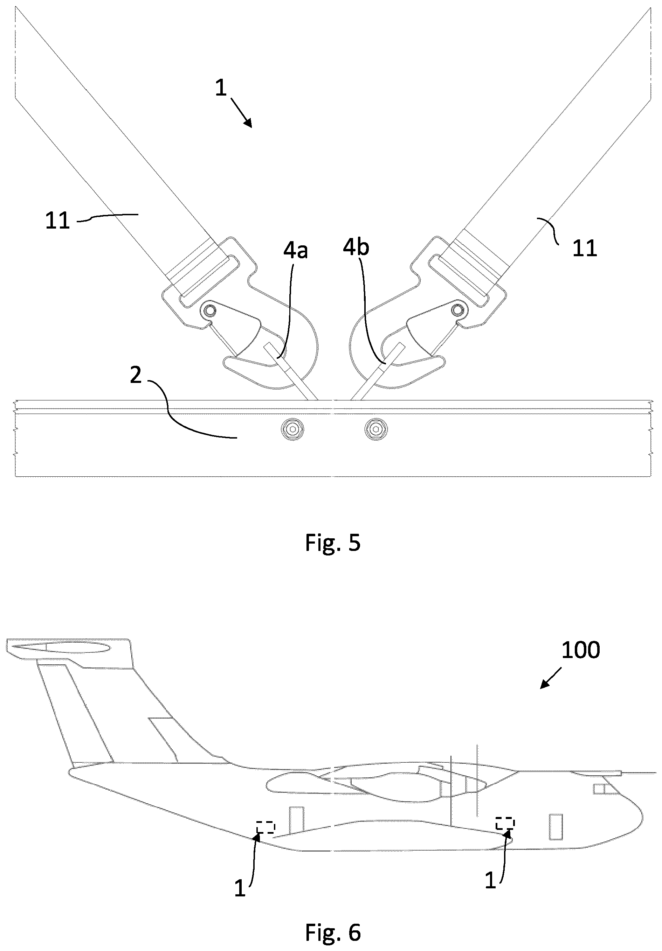

Fig. 5 shows a schematic side view of a lashing device 1 according to a further exemplary embodiment of the invention in a lashed state in which two lashing elements 4a, 4b are individually lashed.

A maximum load capacity is distributable between the two lashing elements 4a, 4b. By way of example, a tensioning strap 11 is in each case detachably secured to the two lashing elements 4a, 4b. The two tensioning straps 11 may be oriented at any angle or different angles. For example, the maximum load capacity is distributed equally between the at least two lashing elements. That is to say in the case of two lashing elements, each lashing element can be loaded with half the maximum load capacity if the lashing elements, as here, are lashed individually.

The maximum load capacity or bearing load of the lashing device 1 may be approximately 25 kilopound force (klbf) or more. This equates to approximately 11,339.8 kg or 111,205.54 N.

Fig. 6 shows a schematic view of an aircraft 100 according to an exemplary embodiment of the invention with a cargo loading system and a lashing device 1.

The lashing device 1 may be formed, for example, according to an exemplary embodiment according to Figs 1-5. The main body 2 is secured, for example, to a frame of a fuselage structure of the aircraft 100. This means that large static forces can be absorbed via the lashing device 1.

For example, a multiplicity of lashing devices 1 of preferably identical design are provided at the cargo loading system. The use of said lashing device 1 in particular for cargo aircraft or military aircraft is conceivable. In principle, however, the lashing device 1 may be used in any type of aircraft.

In order to improve the stringency of the representation, various features were combined in one or more examples in the detailed description above. However, it should be clear in this case that the description above is only of an illustrative and in no way restrictive nature. Many other examples will be immediately and directly clear to a person skilled in the art on the basis of their technical knowledge in view of the description above.

The exemplary embodiments were chosen and described in order to be able to represent the principles on which the invention is based and their possible uses in practice in the best possible manner. As a result, experts may optimally modify and use the invention and its various exemplary embodiments for the intended purpose. In the claims and the description, the terms "containing" and "having" are used as neutral concepts for the corresponding term "comprising". Furthermore, use of the terms "a", "an" and "one" is not intended to fundamentally exclude a plurality of features and components described in such a way.

### List of reference signs

- 1: lashing device
- 2: main body
- 3: supporting structure
- 4a, 4b: first, second lashing element
- 5: end section
- 6: end section
- 7: bolt device
- 8: facing sides
- 9: clamping device
- 10: spring device
- 11: tensioning strap

- 100: aircraft

- X: pivot axis

## Claims

1. Lashing device (1) for a cargo loading system of a means of transport, comprising:
a main body (2) for load bearing and securing to a supporting structure (3);
and
at least two lashing elements (4a, 4b) for lashing loads or goods, wherein the at least two lashing elements (4a, 4b) are mounted on the main body (2) so as to be pivotable about a pivot axis (X) and are designed to be lashable in each case individually or as a unit, wherein the at least two lashing elements (4a, 4b) each have two end sections (5, 6) which form the mounting, which is pivotable about the pivot axis (X), on the main body (2),
wherein the two end sections (5, 6) of a first lashing element (4a) of the at least two lashing elements (4a, 4b) are formed in a complementary manner to corresponding end sections (5, 6) of a second lashing element (4b) of the at least two lashing elements (4a, 4b) in such a way that the corresponding end sections (5; 6) of the at least two lashing elements (4a; 4b) are arranged next to each other along the pivot axis (X), wherein an end section (5; 6) of the first lashing element (4a) has a bifurcation region which axially delimits the corresponding end section (5; 6) of the second lashing element (4b) with respect to the pivot axis (X).

2. Lashing device (1) according to Claim 1, wherein an end section (5; 6) of the first lashing element (4a) and the corresponding end section (5; 6) of the second lashing element (4b) each have a bifurcation region, wherein the two bifurcation regions are in engagement with each other.

3. Lashing device (1) according to Claim 1 or 2, wherein the in each case two end sections (5, 6) each have a through hole in the direction of the pivot axis (X) and are mounted on the main body (2) so as to be pivotable about the pivot axis (X) by means of two bolt devices (7), wherein the two bolt devices (7) correspond to the through holes in the in each case two end sections (5, 6).

4. Lashing device (1) according to any one of the preceding claims, wherein the at least two lashing elements (4a, 4b) substantially have a square or semi-circular cross section, wherein mutually facing sides (8) of the at least two lashing elements (4a, 4b) form mutually corresponding surfaces for the flat contact of the mutually facing sides (8).

5. Lashing device (1) according to any one of the preceding claims, wherein a maximum load capacity is distributable between the at least two lashing elements (4a, 4b), wherein a tensioning strap (11) is in each case detachably secured to the two lashing elements (4a, 4b).

6. Lashing device (1) according to any one of the preceding claims, wherein the at least two lashing elements (4a, 4b) are pivotable about the pivot axis (X) into an at least approximately horizontal position in order to provide the lashing device (1) in a space-saving and/or obstruction-free manner in a non-lashed state.

7. Lashing device (1) according to any one of the preceding claims, further comprising a clamping device (9), which is designed to hold the at least two lashing elements (4a, 4b) together in a non-lashed state as a unit, so that the at least two lashing elements are easy to handle, in particular pivotable together.

8. Aircraft (100) comprising a cargo loading system having at least one lashing device (1) according to any one of the preceding claims.

## Patentansprüche

1. Zurrvorrichtung (1) für ein Frachtladesystem eines Transportmittels, umfassend:
einen Grundkörper (2) zur Lastaufnahme und Befestigung an einer Tragstruktur (3); und
mindestens zwei Zurrelemente (4a, 4b) zum Verzurren von Lasten oder Gütern, wobei die mindestens zwei Zurrelemente (4a, 4b) derart an dem Grundkörper (2) gelagert sind, dass sie um eine Schwenkachse (X) schwenkbar sind, und dazu ausgebildet sind, jeweils einzeln oder als eine Einheit verzurrbar zu sein, wobei die mindestens zwei Zurrelemente (4a, 4b) jeweils zwei Endabschnitte (5, 6) aufweisen, die die um die Schwenkachse (X) schwenkbare Lagerung an dem Grundkörper (2) bilden, wobei die zwei Endabschnitte (5, 6) eines ersten Zurrelements (4a) der mindestens zwei Zurrelemente (4a, 4b) derart komplementär zu korrespondierenden Endabschnitten (5, 6) eines zweiten Zurrelements (4b) der mindestens zwei Zurrelemente (4a, 4b) gebildet sind, dass die korrespondierenden Endabschnitte (5; 6) der mindestens zwei Zurrelemente (4a; 4b) entlang der Schwenkachse (X) nebeneinander angeordnet sind, wobei ein Endabschnitt (5; 6) des ersten Zurrelements (4a) einen Bifurkationsbereich aufweist, der den korrespondierenden Endabschnitt (5; 6) des zweiten Zurrelements (4b) in Bezug zu der Schwenkachse (X) axial begrenzt.

2. Zurrvorrichtung (1) nach Anspruch 1, wobei ein Endabschnitt (5; 6) des ersten Zurrelements (4a) und der korrespondierende Endabschnitt (5; 6) des zweiten Zurrelements (4b) jeweils einen Bifurkationsbereich aufweisen, wobei die zwei Bifurkationsbereiche miteinander in Eingriff stehen.

3. Zurrvorrichtung (1) nach Anspruch 1 oder 2, wobei die jeweils zwei Endabschnitte (5, 6) jeweils eine Durchgangsbohrung in Richtung der Schwenkachse (X) aufweisen und mittels zweier Bolzenvorrichtungen (7) an dem Grundkörper (2) derart gelagert sind, dass sie um die Schwenkachse (X) schwenkbar sind, wobei die zwei Bolzenvorrichtungen (7) mit den Durchgangsbohrungen in den jeweils zwei Endabschnitten (5, 6) korrespondieren.

4. Zurrvorrichtung (1) nach einem der vorhergehenden Ansprüche, wobei die mindestens zwei Zurrelemente (4a, 4b) im Wesentlichen einen viereckigen oder halbkreisförmigen Querschnitt aufweisen, wobei einander zugewandte Seiten (8) der mindestens zwei Zurrelemente (4a, 4b) miteinander korrespondierende Flächen zum flächigen Kontakt der einander zugewandten Seiten (8) bilden.

5. Zurrvorrichtung (1) nach einem der vorhergehenden Ansprüche, wobei eine maximale Tragfähigkeit auf die mindestens zwei Zurrelemente (4a, 4b) verteilbar ist, wobei ein Spannband (11) jeweils an den zwei Zurrelementen (4a, 4b) lösbar befestigt ist.

6. Zurrvorrichtung (1) nach einem der vorhergehenden Ansprüche, wobei die mindestens zwei Zurrelemente (4a, 4b) um die Schwenkachse (X) in eine zumindest annähernd horizontale Lage schwenkbar sind, um die Zurrvorrichtung (1) in einem nicht verzurrten Zustand platzsparend und/oder hindernisfrei bereitzustellen.

7. Zurrvorrichtung (1) nach einem der vorhergehenden Ansprüche, ferner umfassend eine Klemmvorrichtung (9), die dazu ausgebildet ist, die mindestens zwei Zurrelemente (4a, 4b) in einem nicht verzurrten Zustand als eine Einheit zusammenzuhalten, damit die mindestens zwei Zurrelemente leicht handhabbar, insbesondere gemeinsam schwenkbar, sind.

8. Luftfahrzeug (100), umfassend ein Frachtladesystem mit mindestens einer Zurrvorrichtung (1) nach einem der vorhergehenden Ansprüche.

## Revendications

1. Dispositif d'arrimage (1) pour un système de chargement de fret d'un moyen de transport, comprenant :
un corps principal (2) destiné à supporter et à sécuriser une charge sur une structure porteuse (3) ; et
au moins deux éléments d'arrimage (4a, 4b) destinés à arrimer des charges ou des marchandises, les au moins deux éléments d'arrimage (4a, 4b) étant montés sur le corps principal (2) de sorte à pouvoir pivoter autour d'un axe de pivotement (X) et étant conçus pour pouvoir être arrimés dans chaque cas individuellement ou en tant qu'unité, les au moins deux éléments d'arrimage (4a, 4b) présentant chacun deux sections d'extrémité (5, 6) qui forment le montage, qui peut pivoter autour de l'axe de pivotement (X), sur le corps principal (2), les deux sections d'extrémité (5, 6) d'un premier élément d'arrimage (4a) des au moins deux éléments d'arrimage (4a, 4b) étant formées de manière complémentaire à des sections d'extrémité (5, 6) correspondantes d'un second élément d'arrimage (4b) des au moins deux éléments d'arrimage (4a, 4b) de sorte que les sections d'extrémité (5 ; 6) correspondantes des au moins deux éléments d'arrimage (4a ; 4b) soient disposées l'une à côté de l'autre le long de l'axe de pivotement (X), une section d'extrémité (5 ; 6) du premier élément d'arrimage (4a) présentant une zone de bifurcation qui délimite axialement la section d'extrémité (5 ; 6) correspondante du second élément d'arrimage (4b) par rapport à l'axe de pivotement (X).

2. Dispositif d'arrimage (1) selon la revendication 1, une section d'extrémité (5 ; 6) du premier élément d'arrimage (4a) et la section d'extrémité (5 ; 6) correspondante du second élément d'arrimage (4b) présentant chacune une zone de bifurcation, les deux zones de bifurcation étant en prise l'une avec l'autre.

3. Dispositif d'arrimage (1) selon la revendication 1 ou 2, les deux sections d'extrémité (5, 6) présentant chacune un trou traversant dans la direction de l'axe de pivotement (X) et étant montées sur le corps principal (2) de sorte à pouvoir pivoter autour de l'axe de pivotement (X) au moyen de deux dispositifs de verrouillage (7), les deux dispositifs de verrouillage (7) correspondant aux trous traversants dans les deux sections d'extrémité (5, 6).

4. Dispositif d'arrimage (1) selon l'une quelconque des revendications précédentes, les au moins deux éléments d'arrimage (4a, 4b) présentant sensiblement une section transversale carrée ou semi-circulaire, les côtés (8) se faisant mutuellement face des au moins deux éléments d'arrimage (4a, 4b) formant des surfaces mutuellement correspondantes pour le contact plat des côtés (8) se faisant mutuellement face.

5. Dispositif d'arrimage (1) selon l'une quelconque des revendications précédentes, une capacité de charge maximale pouvant être répartie entre les au moins deux éléments d'arrimage (4a, 4b), une sangle de tension (11) étant dans chaque cas fixée de manière amovible aux deux éléments d'arrimage (4a, 4b).

6. Dispositif d'arrimage (1) selon l'une quelconque des revendications précédentes, les au moins deux éléments d'arrimage (4a, 4b) pouvant pivoter autour de l'axe de pivotement (X) dans une position au moins approximativement horizontale afin de fournir le dispositif d'arrimage (1) de manière peu encombrante et/ou sans obstruction dans un état non-arrimé.

7. Dispositif d'arrimage (1) selon l'une quelconque des revendications précédentes, comprenant en outre un dispositif de serrage (9) qui est conçu pour maintenir les au moins deux éléments d'arrimage (4a, 4b) ensemble dans un état non-arrimé en tant qu'unité, de sorte que les au moins deux éléments d'arrimage soient faciles à manipuler, en particulier de sorte qu'ils puissent pivoter ensemble.

8. Aéronef (100) comprenant un système de chargement de fret comportant au moins un dispositif d'arrimage (1) selon l'une quelconque des revendications précédentes.
